# EUROPEAN PATENT SPECIFICATION

(11) **EP 3 775 044 B1**
(45) Date of publication and mention of the grant of the patent: **05.06.2024**
(21) Application number: 19715965.0
(22) Date of filing: 11.04.2019
(51) Int. Cl.: C08L 71/08, C08K 3/38, B33Y 10/00, B33Y 70/10, B29C 64/118, B33Y 80/00

(54) **METHOD FOR MANUFACTURING A THREE-DIMENSIONAL OBJECT USING A NITRIDE**
VERFAHREN ZUR HERSTELLUNG EINES DREIDIMENSIONALEN OBJEKTS UNTER VERWENDUNG EINES NITRIDS
PROCÉDÉ DE FABRICATION D'UN OBJET TRIDIMENSIONNEL À L'AIDE DE NITRURE

(30) Priority: 12.04.2018 US 201862656617 P; 14.06.2018 EP 18177863
(43) Date of publication of application: 17.02.2021
(73) Proprietor: Solvay Specialty Polymers USA, LLC., Alpharetta, GA 30005-3914 (US)
(72) Inventor: JEOL, Stéphane, Cumming, GA 30041 (US); SINGLETARY, Nancy, J., Alpharetta, GA 30004 (US); EL-HIBRI, Mohammad Jamal, Atlanta, GA 30350 (US); GERSCHICK, Tanner, Roswell, GA 30076 (US)
(74) Representative: Benvenuti, Federica
(86) International application number: PCT/EP2019/059359
(87) International publication number: WO 2019/197587

(56) References cited:
- EP-A1- 0 157 466
- WO-A1-2014/096059
- WO-A1-2016/109351
- WO-A1-2016/191473
- WO-A2-2008/116939
- US-A- 5 131 827
- US-A1- 2017 130 060

## Description

### Technical Field

The present disclosure relates to a method for manufacturing three-dimensional (3D) objects using an additive manufacturing system, wherein the 3D object is printed from a part material comprising from 50 to 99 wt. % of a polymeric material comprising at least one poly(aryl ether ketone) polymer (PAEK), and optionally at least one poly(biphenyl ether sulfone) polymer (PPSU) and/or at least one poly(ether imide) polymer (PEI), and at least one nitride (N), preferably a boron nitride (BN). In particular, the present disclosure relates to a filament for use in additive manufacturing systems to print 3D objects.

### Background Art

Additive manufacturing systems are used to print or otherwise build 3D parts from digital representations of the 3D parts using one or more additive manufacturing techniques. Examples of commercially available additive manufacturing techniques include extrusion-based techniques, selective laser sintering, powder/binder jetting, electron-beam melting and stereolithography processes. For each of these techniques, the digital representation of the 3D part is initially sliced into multiple horizontal layers. For each sliced layer, a tool path is then generated, which provides instructions for the particular additive manufacturing system to print the given layer.

For example, in an extrusion-based additive manufacturing system, a 3D part may be printed from a digital representation of the 3D part in a layer-by-layer manner by extruding and adjoining strips of a part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation. An example of extrusion-based additive manufacturing system starting from filaments is called Fused Filament Fabrication (FFF), also known as Fused Deposition Modelling (FDM).

D1 (EP 0157466 A1) discloses (Ex 1 to 3) blends containing PEEK and boron nitride which are extruded to form a lace ("filament") wherein the diameter of the die is 5 mm. The lace is then chopped into granules. D1 therefore does not describe a filament for additive manufacturing. D1 was made available to the public in 1985 at a time where additive manufacturing did not exist yet.

D2 (US 5,131,827) relates to a resin composition for scroll compressor parts and a method of manufacturing scroll compressor parts. D2 discloses (Ex 6) a composition comprising PEEK and boron nitride. D2 was made available to the public at a time when additive manufacturing did not exist.

D3 (WO 2014/096059) relates to a fastener comprising a polymer composition comprising: (i) at least one PAEK polymer, (ii) at least one nitride (NI). As described in the examples, the composition is extruded and pelletized using a pelletizer. D3 does not describe the manufacture of a filament part material. It does not describe a process for manufacturing a 3D object using an additive manufacturing system.

D4 (US 2017/130060) relates to powder coating compositions. D4 does not generally relate to additive manufacturing and does not describe processes or filaments for use in such additive manufacturing.

D5 (WO 2016/191473) relates to a method for printing a 3D part with an additive manufacturing system. D5 does not teach the use of nitride, for example boron nitride.

One of the fundamental limitations associated with known additive manufacturing methods is based on the lack of identification of a polymeric material which allows obtaining a resulting 3D part with acceptable mechanical properties.

There is therefore a need for polymeric part material to be used in FFF additive manufacturing systems, which make possible the manufacture of 3D objects presenting an improved set of mechanical properties (e.g. modulus, tensile properties, ductility and colorability).

### Summary of invention

An aspect of the present invention is directed to a method for manufacturing a three-dimensional (3D) object with an additive manufacturing systemas disclosed in claim 1.

According to an embodiment, the method also includes the extrusion of the part material, with an extrusion-based additive manufacturing system, also known as fused filament fabrication technique (FFF).

Another aspect of the invention is directed to a filament material as disclosed in claim 9 comprising from 50 to 99 wt. % of a polymeric material comprising at least one poly(aryl ether ketone) polymer (PAEK), and optionally at least one poly(biphenyl ether sulfone) polymer (PPSU), and at least one nitride (N), preferably a boron nitride (BN).

Another aspect yet of the present invention is directed to the use of the herein described part material for the manufacture of three-dimensional objects or for the manufacture of a filament for use in the manufacture of three-dimensional objects.

The applicant has found that the use of nitride makes possible the manufacture of 3D objects presenting improved mechanical properties (e.g. modulus, ductility and tensile strength).

The 3D objects or articles obtainable by such method of manufacture can be used in a variety of final applications. Mention can be made in particular of implantable device, dental prostheses, brackets and complex shaped parts in the aerospace industry and under-the-hood parts in the automotive industry.

### Description of embodiments

The present invention relates to a method for manufacturing a three-dimensional (3D) object with an additive manufacturing system, such as an extrusion-based additive manufacturing system (for example FFF).

The method of the present invention comprises a step of printing layers of the three-dimensional (3D) object from a part material.

The merit of the applicant has been to surprisingly identify that the addition of nitride, for example boron nitride, to a polymeric component, PAEK, optionally in blends with PPSU and/or PEI, makes possible the manufacture of 3D objects having a good mechanical property profile (i.e. tensile strength, ductility and modulus).

The expression "polymer" or "copolymer" is hereby used to designate homopolymers containing substantially 100 mol. % of the same recurring units and copolymers comprising at least 50 mol. % of the same recurring units, for example at least about 60 mol. %, at least about 65 mol. %, at least about 70 mol. %, at least about 75 mol. %, at least about 80 mol. %, at least about 85 mol. %, at least about 90 mol. %, at least about 95 mol. % or at least about 98 mol. %.

The expression "part material" hereby refers to a blend of material, notably polymeric compounds, intended to form at least a part of the 3D object. The part material is according to the present invention used as feedstocks to be used for the manufacture of 3D objects or part of 3D objects.

In the present application:
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

According to an embodiment, the part material is in the form of a filament. The expression "filament" refers to a thread-like object or fiber formed of a material or blend of materials which according to the present invention comprises polymer (P1) and polymer (P2).

The filament may have a cylindrical or substantially cylindrical geometry, or may have a non-cylindrical geometry, such as a ribbon filament geometry; further, filament may have a hollow geometry, or may have a core-shell geometry, with another polymeric composition, being used to form either the core or the shell.

According to an embodiment of the invention, the method for manufacturing a three-dimensional object with an additive manufacturing system comprises a step consisting in extruding the part material. This step may for example occurs when printing or depositing strips or layers of part material. The method for manufacturing 3D objects with an extrusion-based additive manufacturing system is also known as fused filament fabrication technique (FFF).

FFF 3D printers are, for example, commercially available from Apium, from Hyrel, from Roboze, from NVBots, from AON3D or from Stratasys, Inc. (under the trade name Fortus^{®}).

### Part material

The part material employed in the method of the present invention comprises:
- from 50 to 99 wt. % of a polymeric material, and
- at least one nitride (N), preferably a boron nitride (BN),
and the part material comprises at least 1 wt.% and less than 10 wt.% of at least one nitride (N), these proportions in wt.% being based on the total weight of the part material.

The part material of the invention may include other components. For example the part material may comprise at least one additive (A), notably at least one additive (A) selected from the group consisting of fillers, colorants, lubricants, plasticizers, stabilizers, flame retardants, nucleating agents, flow enhancers and combinations thereof. Fillers in this context can be reinforcing or non-reinforcing in nature.

The part material may for example comprise up to 45 wt. % of at least one additive (A), based on the total weight of the part material.

In embodiments that include fillers (F), the concentration of the fillers in the part material ranges from 0.1 wt. % to 45 wt. %, preferentially from 0.5 to 30 wt. %, even more preferentially from 1 to 20 wt. % with respect to the total weight of the part material. Suitable fillers include calcium carbonate, magnesium carbonate, glass fibers, graphite, carbon black, carbon fibers, carbon nanotubes, graphene, graphene oxide, fullerenes, talc, wollastonite, mica, alumina, silica, titanium dioxide, kaolin, silicon carbide, zirconium tungstate, boron nitride and combinations thereof.

The part material of the present invention comprises:
- from 50 to 99 wt. % of a polymeric material comprising at least one PAEK, optionally at least one PPSU, and
- from 1 to 10 wt. % of at least one nitride (N), preferably from 1 to 10 wt. % of boron nitride (BN), for example from 2 to 9 wt. % or from 3 to 8 wt. % of at least one nitride (N), based on the total weight of the part material.

### Nitride (N)

As used herein, "at least one nitride (N)" denotes one or more than one nitride (N). Mixtures of nitrides (N) can be used for the purposes of the invention.

The nitride (N) is for example chosen from nitrides of an element chosen from Groups IIIa, IVa, IVb, Va, Vb, VIa, VIb, VIIb and VIII of the Periodic Table of the Elements, and more preferably from nitrides of an element of Group IIIa of the Periodic Table of the Elements.

The preferred nitride (N) in the context of the present invention is boron nitride (BN).

The average particle size of the nitride (N) is advantageously equal to or below 30 µm, preferably equal to or below 20 µm, more preferably equal to or below 18 µm, more preferably equal to or below 10 µm.

The average particle size of the nitride (N) is preferably equal to or at least 0.05 µm, equal to or at least 0.1 µm, more preferably equal to or at least 0.2 µm, equal to or at least 1 µm.

The average particle size of the nitride (NI) is preferably from 1 µm to 10 µm, more preferably from 1.5 to 5 µm.

### Poly(aryl ether ketone) (PAEK)

As used herein, a poly(aryl ether ketone) (PAEK) denotes any polymer comprising recurring units (R_{PAEK}) comprising a Ar'-C(=O)-Ar* group, where Ar' and Ar*, equal to or different from each other, are aromatic groups, the mol. % being based on the total number of moles of recurring units in the polymer. The recurring units (R_{PAEK}) are selected from the group consisting of units of formulas (J-A) to (J-D) below: 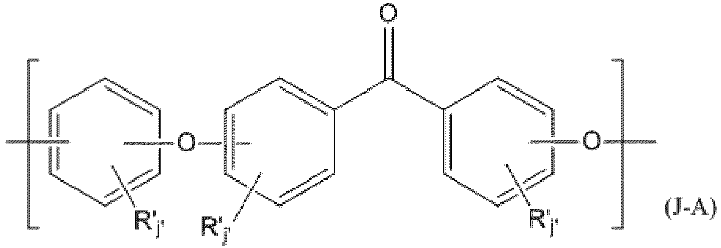 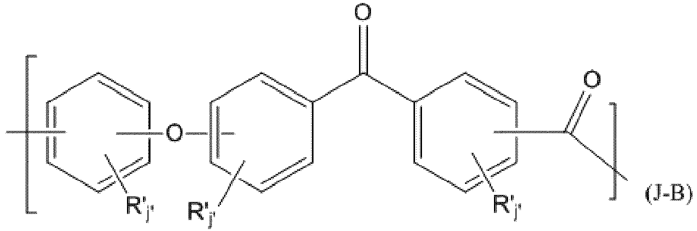 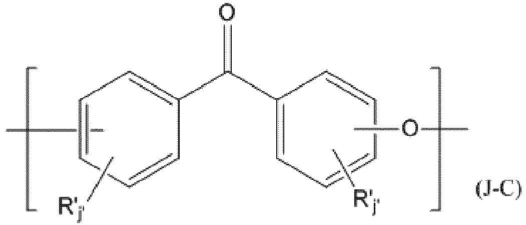 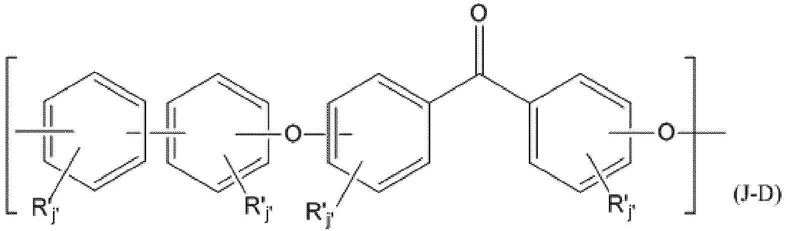 where:
- R', at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' is independently zero or an integer ranging from 1 to 4.

In recurring unit (R_{PAEK}), the respective phenylene moieties may independently have 1,2-, 1,4- or 1,3-linkages to the other moieties different from R' in the recurring unit (R_{PAEK}). Preferably, the phenylene moieties have 1,3- or 1,4- linkages, more preferably they have a 1,4-linkage.

In recurring units (R_{PAEK}), j' is preferably at each location zero so that the phenylene moieties have no other substituents than those linking the main chain of the polymer.

The part material of the invention may comprise PAEK in an amount ranging from 50 to 99 wt. % or from 55 to 98 wt. %, for example from 60 to 95 wt. % or from 65 to 90 wt. %, based on the total weight of the part material.

According to an embodiment, the PAEK is a poly(ether ether ketone) (PEEK).

As used herein, a poly(ether ether ketone) (PEEK) denotes any polymer comprising recurring units (R_{PEEK}) of formula (J-A), based on the total number of moles of recurring units in the polymer: 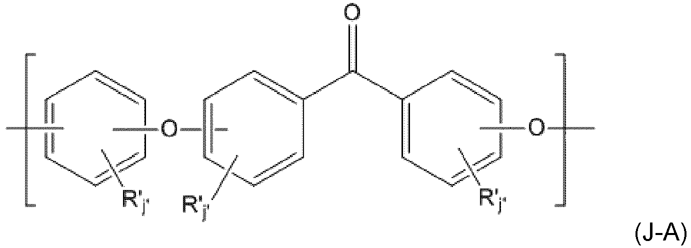 where
- R' , at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' , for each R' , is independently zero or an integer ranging from 1 to 4 (for example 1, 2, 3 or 4).

According to formula (J-A), each aromatic cycle of the recurring unit (R_{PEEK}) may contain from 1 to 4 radical groups R'. When j' is 0, the corresponding aromatic cycle does not contain any radical group R'.

Each phenylene moiety of the recurring unit (R_{PEEK}) may, independently from one another, have a 1,2-, a 1,3- or a 1,4-linkage to the other phenylene moieties. According to an embodiment, each phenylene moiety of the recurring unit (R_{PEEK}), independently from one another, has a 1,3- or a 1,4-linkage to the other phenylene moieties. According to another embodiment yet, each phenylene moiety of the recurring unit (R_{PEEK}) has a 1,4-linkage to the other phenylene moieties.

According to an embodiment, R' is, at each location in formula (J-A) above, independently selected from the group consisting of a C1-C12 moiety, optionally comprising one or more than one heteroatoms; sulfonic acid and sulfonate groups; phosphonic acid and phosphonate groups; amine and quaternary ammonium groups.

According to an embodiment, j' is zero for each R' . In other words, according to this embodiment, the recurring units (R_{PEEK}) are according to formula (J' -A):

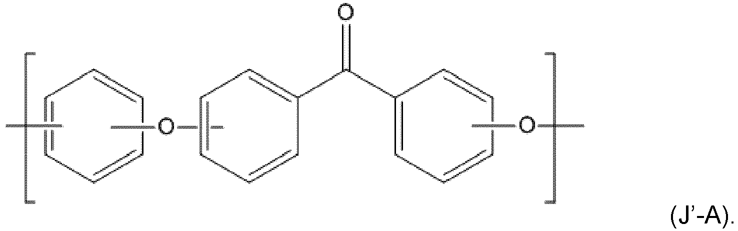

According to another embodiment of the present disclosure, a poly(ether ether ketone) (PEEK) denotes any polymer comprising at least 10 mol. % of the recurring units are recurring units (R_{PEEK}) of formula (J"-A): 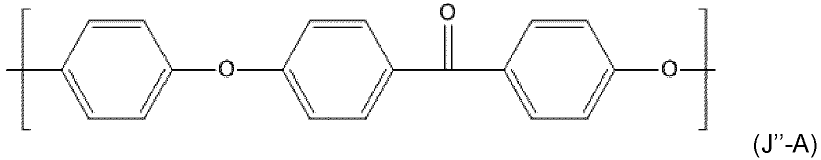 the mol. % being based on the total number of moles of recurring units in the polymer.

According to an embodiment of the present disclosure, at least 10 mol. % (based on the total number of moles of recurring units in the polymer), at least 20 mol. %, at least 30 mol. %, at least 40 mol. %, at least 50 mol. %, at least 60 mol. %, at least 70 mol. %, at least 80 mol. %, at least 90 mol. %, at least 95 mol. %, at least 99 mol. % or all of the recurring units in the PEEK are recurring units (R_{PEEK}) of formulas (J-A), (J'-A) and/or (J"-A).

The PEEK polymer can therefore be a homopolymer or a copolymer. If the PEEK polymer is a copolymer, it can be a random, alternate or block copolymer.

When the PEEK is a copolymer, it can be made of recurring units (R*_{PEEK}), different from and in addition to recurring units (R_{PEEK}), such as recurring units of formula (J-D): 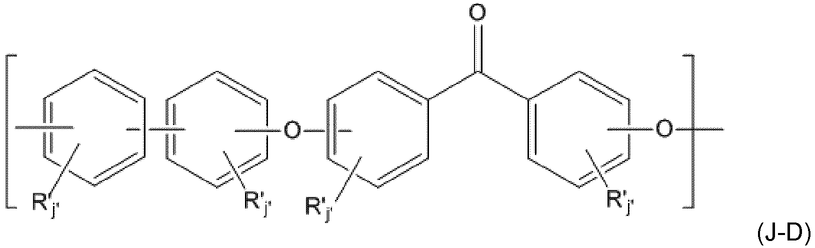 where
- R' , at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' , for each R' , is independently zero or an integer ranging from 1 to 4.

According to formula (J-D), each aromatic cycle of the recurring unit (R*_{PEEK}) may contain from 1 to 4 radical groups R'. When j' is 0, the corresponding aromatic cycle does not contain any radical group R'.

According to an embodiment, R' is, at each location in formula (J-D) above, independently selected from the group consisting of a C1-C12 moiety, optionally comprising one or more than one heteroatoms; sulfonic acid and sulfonate groups; phosphonic acid and phosphonate groups; amine and quaternary ammonium groups.

According to an embodiment, j' is zero for each R' . In other words, according to this embodiment, the recurring units (R*_{PEEK}) are according to formula (J' -D):

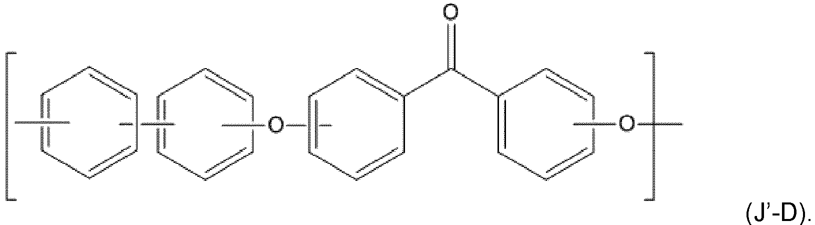

According to another embodiment of the present disclosure, the recurring units (R*_{PEEK}) are according to formula (J"-D):

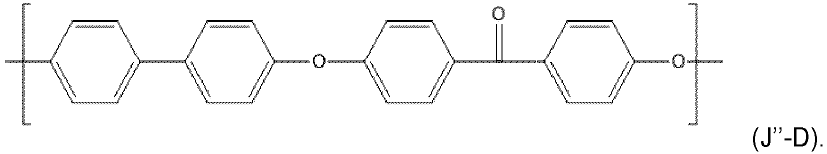

According to an embodiment of the present disclosure, less than 90 mol. % (based on the total number of moles of recurring units in the polymer), less than 80 mol. %, less than 70 mol. %, less than 60 mol. %, less than 50 mol. %, less than 40 mol. %, less than 30 mol. %, less than 20 mol. %, less than 10 mol. %, less than 5 mol. %, less than 1 mol. % or all of the recurring units in the PEEK are recurring units (R*_{PEEK}) of formulas (J-D), (J'-D), and/or (J"-D).

According to an embodiment, the PEEK polymer is a PEEK-PEDEK copolymer. As used herein, a PEEK-PEDEK copolymer denotes a polymer comprising recurring units (R_{PEEK}) of formula (J-A), (J'-A) and/or (J"-A) and recurring units (R*_{PEEK}) of formulas (J-D), (J'-D) or (J"-D) (also called hereby recurring units (R_{PEDEK)}). The PEEK-PEDEK copolymer may include relative molar proportions of recurring units (R_{PEEK}/R_{PEDEK}) ranging from 95/5 to 5/95, from 90/10 to 10/90, or from 85/15 to 15/85. The sum of recurring units (R_{PEEK}) and (R_{PEDEK}) can for example represent at least 60 mol. %, 70 mol. %, 80 mol. %, 90 mol. %, 95 mol. %, 99 mol. %, of recurring units in the PEEK copolymer. The sum of recurring units (R_{PEEK}) and (R_{PEDEK}) can also represent 100 mol. %, of recurring units in the PEEK copolymer.

Defects, end groups and monomers' impurities may be incorporated in very minor amounts in the polymer (PEEK) of the present disclosure, without undesirably affecting the performance of the polymer in the polymer composition (C1).

PEEK is commercially available as KetaSpire^{®} PEEK from Solvay Specialty Polymers USA, LLC.

PEEK can be prepared by any method known in the art. It can for example result from the condensation of 4,4' -difluorobenzophenone and hydroquinone in presence of a base. The reaction of monomer units takes place through a nucleophilic aromatic substitution. The molecular weight (for example the weight average molecular weight Mw) can be controlled by adjusting the monomers molar ratio and measuring the yield of polymerisation (e.g. measure of the torque of the impeller that stirs the reaction mixture).

According to one embodiment of the present disclosure, the PEEK polymer has a weight average molecular weight (Mw) ranging from 65,000 to 105,000 g/mol, for example from 77,000 to 98,000 g/mol, from 79,000 to 96,000 g/mol, from 81,000 to 95,000 g/mol, or from 85,000 to 94,500 g/mol (as determined by gel permeation chromatography (GPC) using phenol and trichlorobenzene (1:1) at 160° C, with polystyrene standards).

The part material of the invention may comprise PEEK in an amount ranging from 50 to 99 wt. % or from 55 to 98 wt. %, for example from 60 to 95 wt. % or from 65 to 90 wt. %, based on the total weight of the part material.

According to the present invention, the melt flow rate or melt flow index (at 400°C under a weight of 2.16 kg according to ASTM D1238) (MFR or MFI) of the PEEK may be from 1 to 60 g/10 min, for example from 2 to 50 g/10 min or from 2 to 40 g/10 min.

In another embodiment, the PAEK is a poly(ether ketone ketone) (PEKK).

As used herein, a poly(ether ketone ketone) (PEKK) denotes a polymer comprising more than 50 mol. % of the recurring units of formulas (J-B₁) and (J-B₂), the mol. % being based on the total number of moles of recurring units in the polymer: 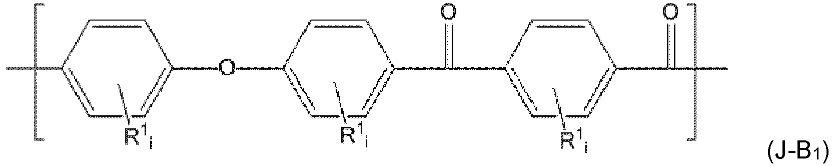 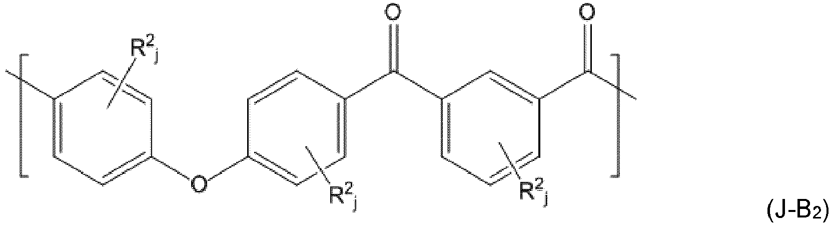 wherein
- R¹ and R², at each instance, is independently selected from the group consisting of an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
- i and j, at each instance, is an independently selected integer ranging from 0 to 4.

According to an embodiment, R¹ and R² are, at each location in formula (J-B₂) and (J-B₁) above, independently selected from the group consisting of a C1-C12 moiety, optionally comprising one or more than one heteroatoms; sulfonic acid and sulfonate groups; phosphonic acid and phosphonate groups; amine and quaternary ammonium groups.

According to another embodiment, i and j are zero for each R¹ and R² group. According to this embodiment, the PEKK polymer comprises at least 50 mol. % of recurring units of formulas (J'-B₁) and (J'-B₂), the mol. % being based on the total number of moles of recurring units in the polymer:

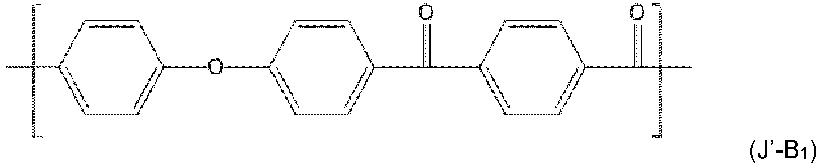

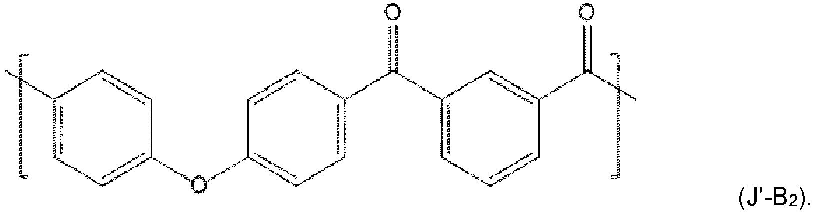

According to an embodiment of the present disclosure, at least 55 mol. %, at least 60 mol. %, at least 70 mol. %, at least 80 mol. %, at least 90 mol. %, at least 95 mol. %, at least 99 mol. % or all of the recurring units in the PEKK are recurring units of formulas (J-B₁) and (J-B₂).

According to an embodiment of the present disclosure, in the PEKK polymer, the molar ratio of recurring units (J-B₂) or/and (J'-B₂) to recurring units (J-B₁) or/and (J'-B₁) is at least 1:1 to 5.7:1, for example at least 1.2:1 to 4:1, at least 1.4:1 to 3:1 or at least 1.4:1 to 1.86:1.

The PEKK polymer has preferably an inherent viscosity of at least 0.50 deciliters per gram (dL/g), as measured following ASTM D2857 at 30°C on 0.5 wt./vol.% solutions in concentrated H₂SO₄ (96 wt. % minimum), for example at least 0.60 dL/g or at least 0.65 dL/g and for example at most 1.50 dL/g, at most 1.40 dL/g, or at most 1.30 dL/g.

The part material of the invention may comprise PEKK in an amount ranging from 50 to 99 wt. % or from 55 to 98 wt. %, for example from 60 to 95 wt. % or from 65 to 90 wt. %, based on the total weight of the part material.

PEKK is commercially available as NovaSpire^{®} PEKK from Solvay Specialty Polymers USA, LLC

### Optional poly(biphenyl ether sulfone) (PPSU)

The part material of the present invention may comprise, in addition to the PAEK polymer, at least one poly(biphenyl ether sulfone) polymer.

A poly(biphenyl ether sulfone) polymer is a poly(aryl ether sulfone) (PAES) which comprises a biphenyl moiety. Poly(biphenyl ether sulfone) is also known as polyphenyl sulfone (PPSU) and for example results from the condensation of 4,4'-dihydroxybiphenyl (biphenol) and 4,4'-dichlorodiphenyl sulfone.

For the purpose of the present invention, a poly(biphenyl ether sulfone) polymer (PPSU) denotes any polymer comprising at least 50 mol. % of recurring units (R_{PPSU}) of formula (L), the mol. % being based on the total number of moles in the polymer: 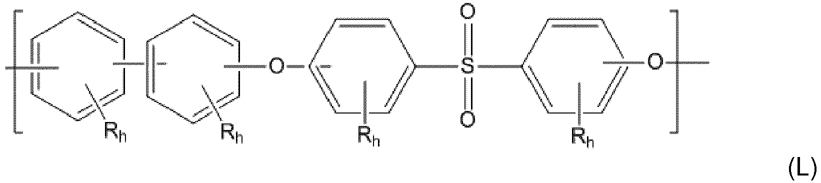 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
- h, for each R, is independently zero or an integer ranging from 1 to 4 (for example 1, 2, 3 or 4).

According to an embodiment, R is, at each location in formula (L) above, independently selected from the group consisting of a C1-C12 moeity optionally comprising one or more than one heteroatoms; sulfonic acid and sulfonate groups; phosphonic acid and phosphonate groups; amine and quaternary ammonium groups.

According to an embodiment, h is zero for each R. In other words, according to this embodiment, the recurring units (R_{PPSU}) are units of formula (L'):

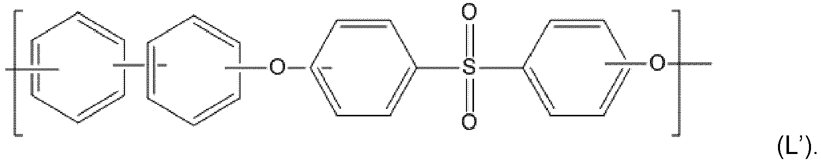

According to an embodiment of the present invention, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (L) and/or formula (L').

According to another embodiment of the present invention, a poly(biphenyl ether sulfone) (PPSU) denotes any polymer comprising at least 50 mol. % of recurring units (R_{PPSU}) of formula (L"): 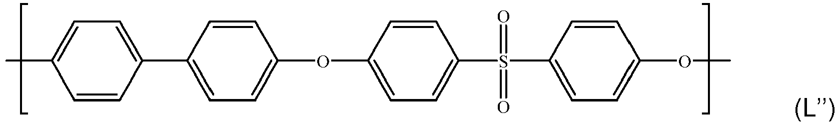 (the mol. % being based on the total number of moles in the polymer).

The PPSU polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (L").

When the poly(biphenyl ether sulfone) (PPSU) is a copolymer, it can be made of recurring units (R*_{PPSU}), different from recurring units (R_{PPSU}), such as recurring units of formulas (M), (N) and/or (O): 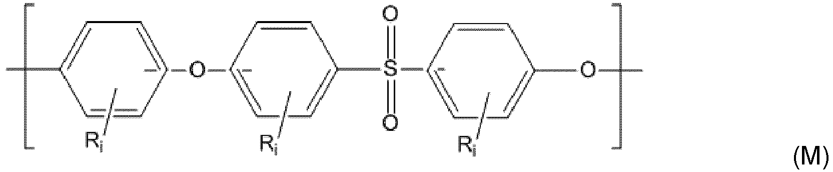 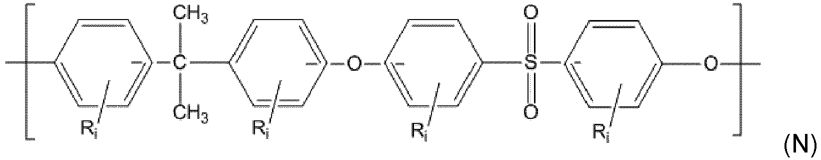 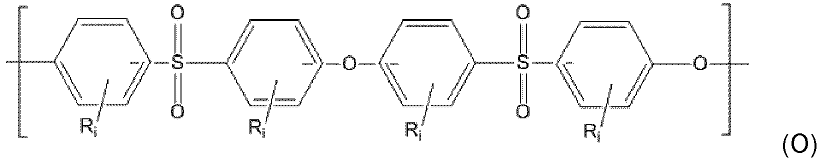 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
- i, for each R, is independently zero or an integer ranging from 1 to 4 (for example 1, 2, 3 or 4).

According to an embodiment, R is, at each location in formulas (M) to (O) above, independently selected from the group consisting of a C1-C12 moeity optionally comprising one or more than one heteroatoms; sulfonic acid and sulfonate groups; phosphonic acid and phosphonate groups; amine and quaternary ammonium groups.

According to an embodiment, i is zero for each R of formulas (M), (N) or (O). In other words, according to this embodiment, the recurring units (R*_{PPSU}) are units of formulas (M'), (N') and/or (O'):

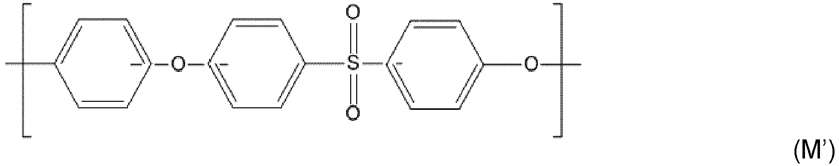

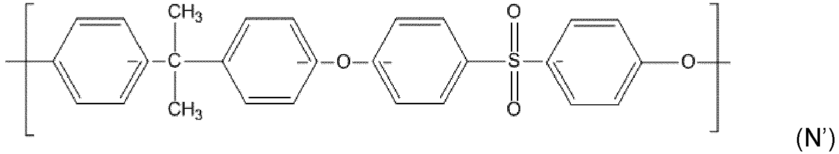

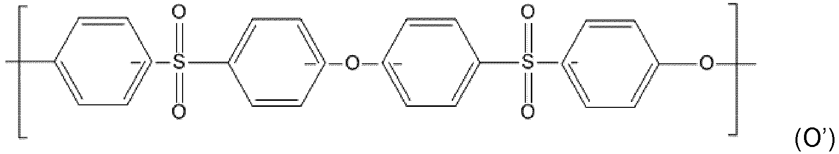

According to an embodiment of the present invention, less than 40 mol. %, less than 30 mol. %, less than 20 mol. %, less than 10 mol. %, less than 5 mol. %, less than 1 mol. % or all of the recurring units in the PPSU are recurring units (R*_{PPSU}) of formulas (M), (N), (O), (M'), (N') and/or (O').

According to another embodiment of the present invention, a poly(biphenyl ether sulfone) (PPSU) is a copolymer and has recurring units (R*_{PPSU}), different from recurring units (R_{PPSU}), such as recurring units of formulas (M"), (N") and/or (O"):

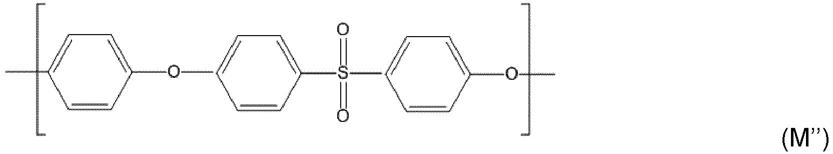

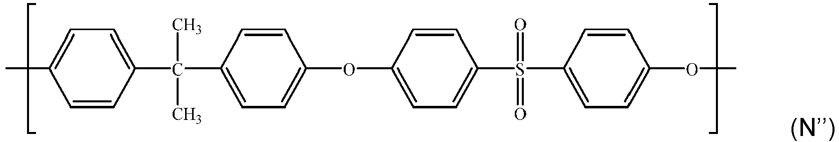

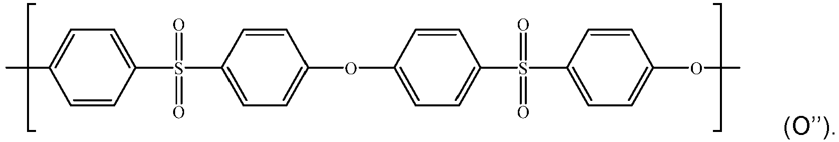

According to an embodiment of the present invention, less than 45 mol. %, less than 40 mol. %, less than 35 mol. %, less than 30 mol. %, less than 20 mol. %, less than 10 mol. %, less than 5 mol. %, less than 1 mol. % or all of the recurring units in the PPSU are recurring units (R*_{PPSU}) of formulas (M"), (N") and/or (O").

According to an embodiment of the present invention, the part material comprises from 1 to 50 wt. % of a poly(biphenyl ether sulfone) (PPSU), based on the total weight of the part material, for example from 2 to 40 wt. % or from 5 to 40 wt. % of PPSU.

According to the present invention, the weight average molecular weight Mw of the PPSU may be from 30,000 to 80,000 g/mol, for example from 35,000 to 75,000 g/mol or from 40,000 to 70,000 g/mol.

According to the present invention, the melt flow rate or melt flow index (at 365°C under a weight of 5 kg according to ASTM D1238) (MFR or MFI) of the PPSU may be from 1 to 60 g/10 min, for example from 5 to 50 g/10 min or from 10 to 40 g/10 min.

The poly(biphenyl ether sulfone) (PPSU) can also be a blend of a PPSU homopolymer and at least one PPSU copolymer as described above.

The poly(biphenyl ether sulfone) (PPSU) can be prepared by any method known in the art. It can for example result from the condensation of 4,4'-dihydroxybiphenyl (biphenol) and 4,4'-dichlorodiphenyl sulfone. The reaction of monomer units takes place through nucleophilic aromatic substitution with the elimination of one unit of hydrogen halide as leaving group. It is to be noted however that the structure of the resulting poly(biphenyl ether sulfone) does not depend on the nature of the leaving group.

Defects, end groups and monomers' impurities may be incorporated in very minor amounts in the (co)polymer (PPSU) of the present invention, so as to advantageously not affecting negatively the performances of the same.

PPSU is commercially available as Radel^{®} PPSU from Solvay Specialty Polymers USA, L.L.C.

According to an embodiment, the part material comprises a weight ratio PAEK/PPSU ranging from 1.3 to 19, preferably 1.8 to 17, even more preferably from 2 to 15 or from 2.5 to 10.

According to an embodiment, the part material comprises a weight ratio PEEK/PPSU ranging from 1.3 to 19, preferably 1.8 to 17, even more preferably from 2 to 15 or from 2.5 to 10.

### Optional poly(ether imide) (PEI)

The part material of the present invention may comprise, in addition to the PAEK polymer, at least one poly(ether imide) polymer (PEI).

As used herein, a poly(ether imide) (PEI) denotes any polymer comprising at least 50 mol. %, based on the total number of moles in the polymer, of recurring units (R_{PEI}) comprising at least one aromatic ring, at least one imide group, as such and/or in its amic acid form, and at least one ether group. Recurring units (R_{PEI}) may optionally further comprise at least one amide group which is not included in the amic acid form of an imide group.

According to an embodiment, the recurring units (R_{PEI}) are selected from the group consisting of following formulas (I), (II), (III), (IV), (V) and mixtures thereof: 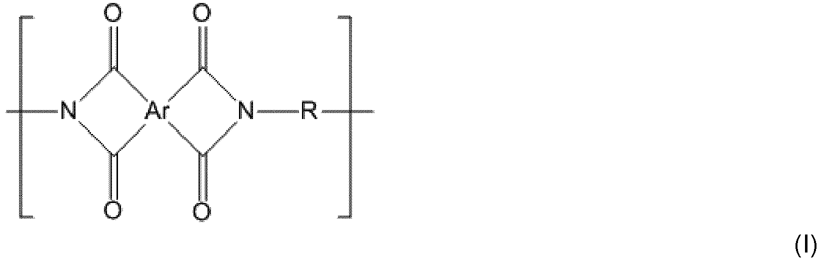 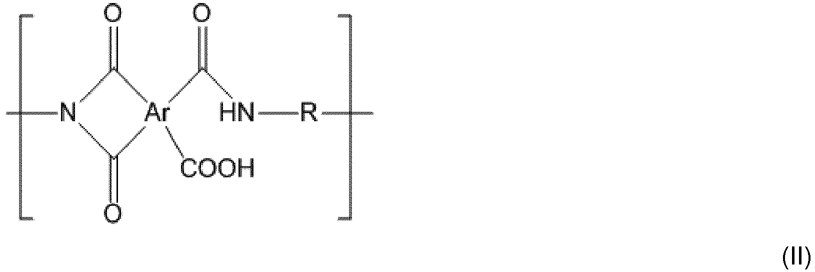 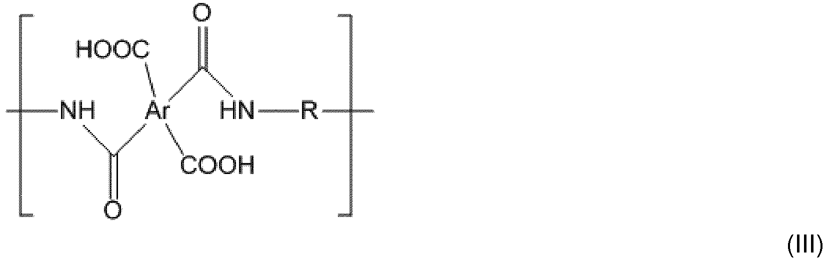 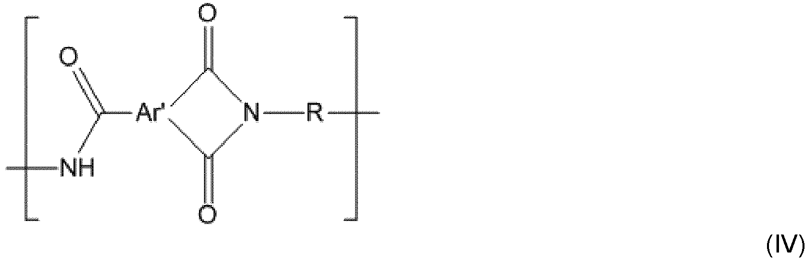 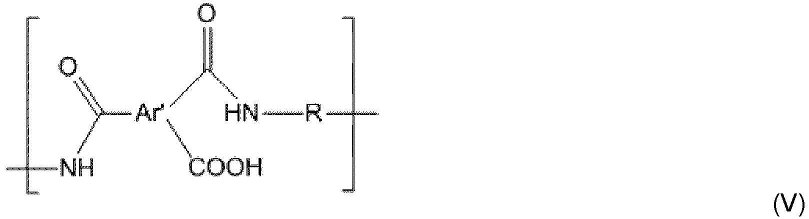 where
- Ar is a tetravalent aromatic moiety and is selected from the group consisting of a substituted or unsubstituted, saturated, unsaturated or aromatic monocyclic and polycyclic group having 5 to 50 carbon atoms;
- Ar' is a trivalent aromatic moiety and is selected from the group consisting of a substituted, unsubstituted, saturated, unsaturated, aromatic monocyclic and aromatic polycyclic group having from 5 to 50 C atoms; and
- R is selected from the group consisting of substituted and unsubstituted divalent organic radicals, for example selected from the group consisting of
   (a) aromatic hydrocarbon radicals having 6 to 20 carbon atoms and halogenated derivatives thereof;
   (b) straight or branched chain alkylene radicals having 2 to 20 carbon atoms ;
   (c) cycloalkylene radicals having 3 to 20 carbon atoms, and
   (d) divalent radicals of formula (VI): 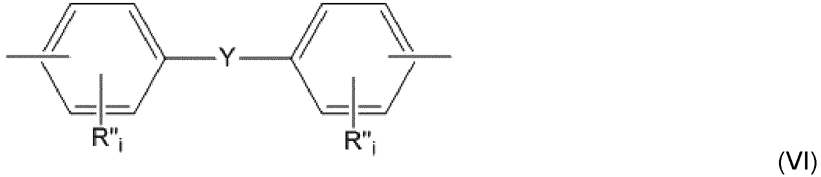
where
- Y is selected from the group consisting of alkylenes of 1 to 6 carbon atoms, for example -C(CH₃)₂ and -CₙH₂ₙ- (n being an integer from 1 to 6); perfluoroalkylenes of 1 to 6 carbon atoms, for example -C(CF₃)₂ and - CₙF₂ₙ-(n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; -SO-, and
- R" is selected from the group consisting of hydrogen, halogen, alkyl, alkenyl, alkynyl, aryl, ether, thioether, carboxylic acid, ester, amide, imide, alkali earth metal sulfonate, alkaline earth metal sulfonate, alkyl sulfonate, alkali earth metal phosphonate, alkaline earth metal phosphonate, alkyl phosphonate, amine and quaternary ammonium and
- i, for each R", is independently zero or an integer ranging from 1 to 4, with the provisio that at least one of Ar, Ar' and R comprise at least one ether group and that the ether group is present in the polymer chain backbone.

According to an embodiment, Ar is selected from the group consisting of formulas: 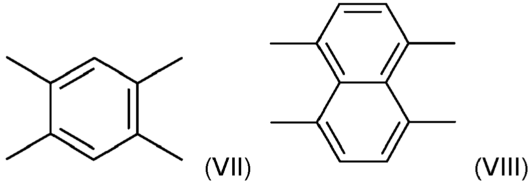 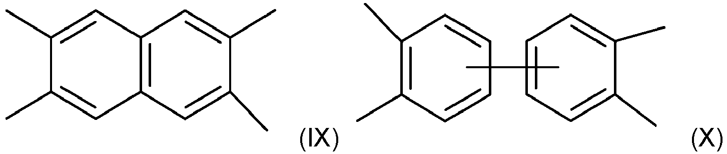 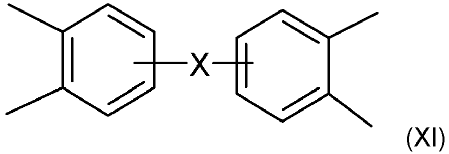 where
X is a divalent moiety, having divalent bonds in the 3,3', 3,4', 4,3" or the 4,4' positions and is selected from the group consisting of alkylenes of 1 to 6 carbon atoms, for example -C(CH₃)₂ and -CₙH₂ₙ- (n being an integer from 1 to 6); perfluoroalkylenes of 1 to 6 carbon atoms, for example -C(CF₃)₂ and -CₙF₂ₙ- (n being an integer from 1 to 6) ; cycloalkylenes of 4 to 8 carbon atoms ; alkylidenes of 1 to 6 carbon atoms; cycloalkylidenes of 4 to 8 carbon atoms ; -O- ; -S- ; -C(O)- ; -SO₂- ; -SO-;
or X is a group of the formula -O-Ar"-O-, wherein Ar" is a aromatic moiety selected from the group consisting of a substituted or unsubstituted, saturated, unsaturated or aromatic monocyclic and polycyclic group having 5 to 50 carbon atoms.

According to an embodiment, Ar' is selected from the group consisting of formulas: 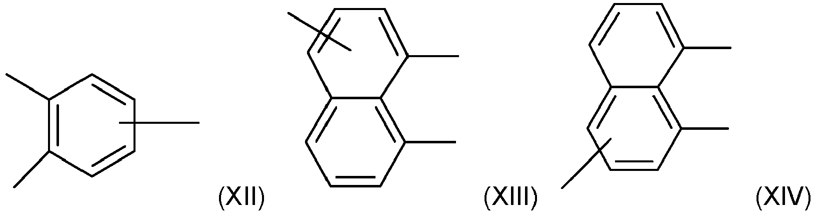 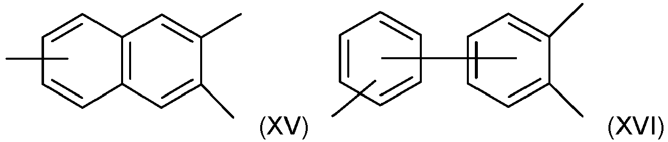 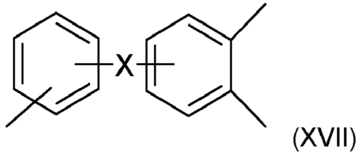 where
X is a divalent moiety, having divalent bonds in the 3,3', 3,4', 4,3" or the 4,4' positions and is selected from the group consisting of alkylenes of 1 to 6 carbon atoms, for example -C(CH₃)₂ and -CₙH₂ₙ- (n being an integer from 1 to 6); perfluoroalkylenes of 1 to 6 carbon atoms, for example -C(CF₃)₂ and -CₙF₂ₙ- (n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; -SO-;
or X is a group of the formula -O-Ar"-O-, wherein Ar" is a aromatic moiety selected from the group consisting of a substituted or unsubstituted, saturated, unsaturated or aromatic monocyclic and polycyclic group having 5 to 50 carbon atoms.

According to an embodiment of the present disclosure, at least 50 mol. %, at least 60 mol. %, at least 70 mol. %, at least 80 mol. %, at least 90 mol. %, at least 95 mol. %, at least 99 mol. % or all of the recurring units in the PEI are recurring units (R_{PEI}) of formulas (I), (II), (III), (IV), (V) and/or mixtures thereof, as defined above.

According to an embodiment, a poly(ether imide) (PEI) denotes any polymer comprising at least 50 mol. %, based on the total number of moles in the polymer, of recurring units (R_{PEI}) of formula (VII): 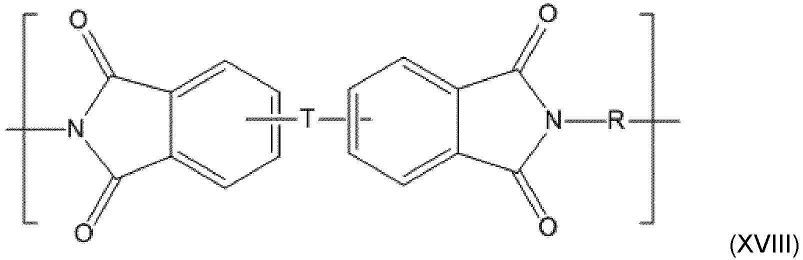 where
- R is selected from the group consisting of substituted and unsubstituted divalent organic radicals, for example selected from the group consisting of
   (a) aromatic hydrocarbon radicals having 6 to 20 carbon atoms and halogenated derivatives thereof;
   (b) straight or branched chain alkylene radicals having 2 to 20 carbon atoms ;
   (c) cycloalkylene radicals having 3 to 20 carbon atoms, and
   (d) divalent radicals of formula (VI): 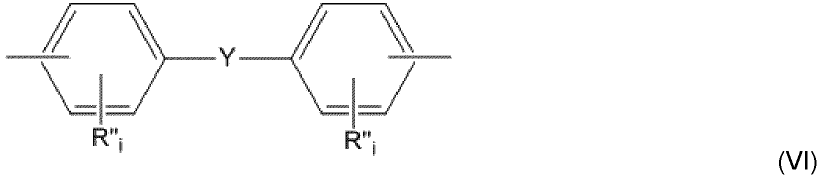 where
- Y is selected from the group consisting of alkylenes of 1 to 6 carbon atoms, for example -C(CH₃)₂ and -CₙH₂ₙ- (n being an integer from 1 to 6); perfluoroalkylenes of 1 to 6 carbon atoms, for example -C(CF₃)₂ and - CₙF₂ₙ-
   (n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; -SO-, and
- R" is selected from the group consisting of hydrogen, halogen, alkyl, alkenyl, alkynyl, aryl, ether, thioether, carboxylic acid, ester, amide, imide, alkali earth metal sulfonate, alkaline earth metal sulfonate, alkyl sulfonate, alkali earth metal phosphonate, alkaline earth metal phosphonate, alkyl phosphonate, amine and quaternary ammonium and
- i, for each R", is independently zero or an integer ranging from 1 to 4, with the provisio that at least one of Ar, Ar' and R comprise at least one ether group and that the ether group is present in the polymer chain backbone.
- T can either be
- O- or - O- Ar" - O-

wherein the divalent bonds of the - O- or the - O - Ar" - O- group are in the 3,3', 3,4', 4,3', or the 4,4' positions,
wherein Ar" is a aromatic moiety selected from the group consisting of a substituted or unsubstituted, saturated, unsaturated or aromatic monocyclic and polycyclic group having 5 to 50 carbon atoms, for example a substituted or unsubtitutated phenylene, a substitued or unsubstituted biphenyl group, a susbtituted ou unsubstituted naphtalene group or a moiety comprising two substituted or unsubtitutated phenylene.

According to an embodiment of the present disclosure, Ar" is of the general formula (VI), as detailed above ; for example, Ar" is of formula (XIX):

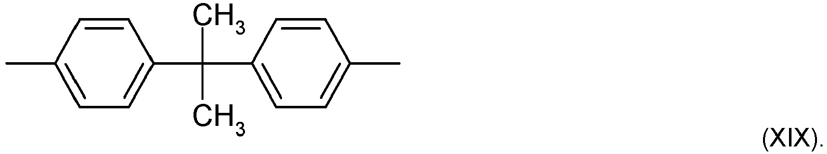

The polyetherimides (PEI) of the present invention may be prepared by any of the methods well-known to those skilled in the art including the reaction of a diamino compound of the formula H₂N-R-NH₂ (XX), where R is as defined before, with any aromatic bis(ether anhydride)s of the formula (XXI): 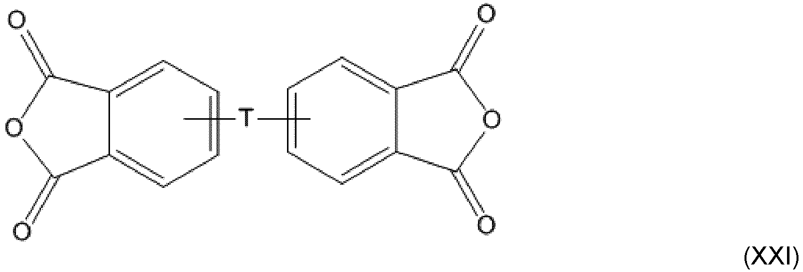 where T as defined before.

In general, the preparation can be carried out in solvents, e.g., o-dichlorobenzene, m-cresol/toluene, N,N-dimethylacetamide, at temperatures ranging from 20°C to 250°C.

Alternatively, these polyetherimides can be prepared by melt polymerization of any dianhydrides of formula (XXI) with any diamino compound of formula (XX) while heating the mixture of the ingredients at elevated temperatures with concurrent intermixing.

The aromatic bis(ether anhydride)s of formula (XXI) include, for example:
2,2-bis[4-(2,3-dicarboxyphenoxy)phenyl]propane dianhydride;
4,4'-bis(2,3-dicarboxyphenoxy)diphenyl ether dianhydride;
1,3-bis(2,3-dicarboxyphenoxy)benzene dianhydride;
4,4'-bis(2,3-dicarboxyphenoxy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydride;
2,2-bis[4 (3,4-dicarboxyphenoxy)phenyl]propane dianhydride ;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4-(2,3-dicarboxyphenoxy)-4'-(3,4-dicarboxyphenoxy)diphenyl-2,2-propane dianhydride ; and mixtures of such dianhydrides.

The organic diamines of formula (XX) are chosen from the group consisting of m-phenylenediamine, p-phenylenediamine, 2,2-bis(p-aminophenyl)propane, 4,4'-diaminodiphenyl-methane, 4,4'-diaminodiphenyl sulfide, 4,4'-diamino diphenyl sulfone, 4,4'-diaminodiphenyl ether, 1,5-diaminonaphthalene, 3,3'-dimethylbenzidine, 3,3'-dimethoxybenzidine, and mixtures thereof; preferably, the organic diamines of formula (XX) are chosen from the group consisting of m-phenylenediamine and p-phenylenediamine and mixture thereof.

According to an embodiment, a poly(ether imide) (PEI) denotes any polymer comprising at least 50 mol. %, based on the total number of moles in the polymer, of recurring units (R_{PEI}) of formulas (XXIII) or (XXIV), in imide forms, or their corresponding amic acid forms and mixtures thereof:

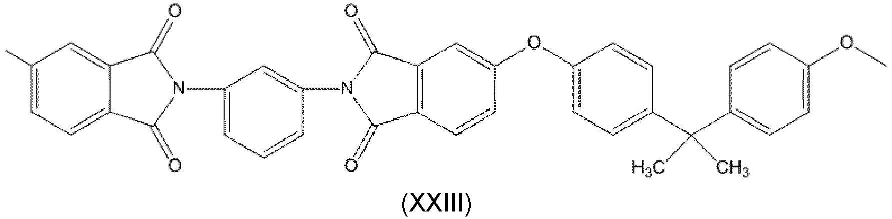

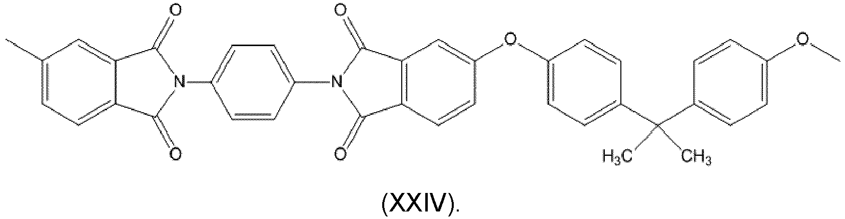

In a preferred embodiment of the present invention, at least 50 mol. %, at least 60 mol. %, at least 70 mol. %, at least 80 mol. %, at least 90 mol. %, at least 95 mol. %, at least 99 mol. % or all of the recurring units in the PEI are recurring units (R_{PEI}) of formulas (XXIII) or (XXIV), in imide forms, or their corresponding amic acid forms and mixtures thereof.

Such aromatic polyimides are notably commercially available from Sabic Innovative Plastics as ULTEM^{®} polyetherimides.

The part material of the present invention may comprise one PEI as additional polymer. Alternatively, it can comprise several PEI, for example two, three, or even more than three PEI, as additional polymers.

In a specific embodiment, the PEI polymer has a weight average molecular weight (Mw) of 10,000 to 150,000 g/mol, as measured by gel permeation chromatography, using a polystyrene standard.

In a specific embodiment, the PEI polymer has an intrinsic viscosity greater than 0.2 deciliters per gram (dl/g), beneficially 0.35 to 0.7 dl/g measured in m-cresol at 25°C.

According to the present invention, the melt flow rate or melt flow index (at 337°C under a weight of 6.6 kg according to ASTM D1238) (MFR or MFI) of the PEI may be from 0.1 to 40 g/10 min, for example from 2 to 30 g/10 min or from 3 to 25 g/10 min.

In a specific embodiment, the PEI polymer has a Tg ranging from 160 and 270° C, as measured by differential scanning calorimetry (DSC) according to ASTM D3418, for example ranging from 170 and 260° C, from 180 and 250° C.

The applicant has found that such part material advantageously presents, when used to manufacture 3D objects, a good mechanical property profile (i.e. tensile strength, ductility and modulus) in comparison to neat resins.

### Part material

The part material of the present invention can be made by methods well known to the person of ordinary skill in the art. For example, such methods include, but are not limited to, melt-mixing processes. Melt-mixing processes are typically carried out by heating the polymer components above the melting temperature of the thermoplastic polymers thereby forming a melt of the thermoplastic polymers. In some embodiments, the processing temperature ranges from about 280-450°C, preferably from about 290-440°C, from about 300-430°C or from about 310-420°C. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the part material, the components of the part material, i.e. the PAEK and optionally PPSU, PEI and additives, are fed to the melt-mixing apparatus and melt-mixed in that apparatus. The components may be fed simultaneously as a powder mixture or granule mixer, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

### Filament material

The present invention also relates to a filament material comprising the part material, as above-described. All of the embodiments described above with respect to the part material do apply equally to the filament material.

The filament is disclosed in claim 9.

According to an embodiment, the polymeric component of the filament material also comprises up to 45 wt. %, based on the total weight of the part material, of at least one additive selected from the group consisting of fillers, colorants, lubricants, plasticizers, flame retardants, nucleating agents, flow enhancers and stabilizers.

This filament material is well-suited for use in a method for manufacturing a three-dimensional object.

As an example, the filament material of the invention may include other components. For example the filament material may comprise at least one additive, notably at least one additive selected from the group consisting of fillers, colorants, lubricants, plasticizers, stabilizers, flame retardants, nucleating agents, flow enhancers and combinations thereof.

The filament may have a cylindrical or substantially cylindrical geometry, or may have a non-cylindrical geometry, such as a ribbon filament geometry; further, filament may have a hollow geometry, or may have a core-shell geometry, with the support material of the present invention being used to form either the core or the shell.

The filament has a cylindrical geometry and its diameter varies between 0.5 mm and 5 mm, for example between 0.8 and 4 mm or for example between 1 mm and 3.5 mm. The diameter of the filament can be chosen to feed a specific FFF 3D printer. An example of filament diameter used extensively in FFF process is 1.75 mm or 2.85 mm diameter.

The filament has a cylindrical geometry and a diameter comprised between 0.5 and 5 mm ± 0.2 mm, preferably between 1 and 3.5 mm ± 0.15 mm.

According to an embodiment, the filament has an ovality (also called roundness) of less than 0.1, for example less than 0.08 or less than 0.06. The ovality of the filament is defined as the difference of the major and minor diameters of the filament divided by the average of the two diameters.

The filament of the present invention can be made from the part material by methods including, but not limited to, melt-mixing processes. Melt-mixing processes are typically carried out by heating the polymer components above the highest melting temperature and glass transition temperature of the thermoplastic polymers thereby forming a melt of the thermoplastic polymers. In some embodiments, the processing temperature ranges from about 280-450°C, preferably from about 290-440°C, from about 300-430°C or from about 310-420°C.

The process for the preparation of the filament can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the filament, the components of the part material, i.e. at least PAEK and optionally PPSU, PEI and additives, are fed to the melt-mixing apparatus and melt-mixed in that apparatus. The components may be fed simultaneously as a powder mixture or granule mixer, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method for manufacturing the filaments also comprises a step of extrusion, for example with a die. For this purpose, any standard molding technique can be used; standard techniques including shaping the polymer compositions in a molten/softened form can be advantageously applied, and include notably compression molding, extrusion molding, injection molding, transfer molding and the like. Extrusion molding is preferred. Dies may be used to shape the articles, for example a die having a circular orifice if the article is a filament of cylindrical geometry.

The method may comprise if needed several successive steps of melt-mixing or extrusion under different conditions.

The process itself, or each step of the process if relevant, may also comprise a step consisting in a cooling of the molten mixture.

### Support material

The method of the present invention may also employ another polymeric component to support the 3D object under construction. This polymeric component, similar or distinct from the part material used to build a 3D object, is hereby called support material. Support material may be required during 3D printing to provide vertical and/or lateral support in the higher operating conditions required for the high-temperature part materials (e.g. PPSU requiring a processing temperature around 320-400°C).

The support material, possibly used in the context of the present method, advantageously possesses a high melting temperature (i.e. above 260°C), in order to resist high temperature applications. The support material may also possess a water absorption behaviour or a solubility in water at a temperature lower than 110°C, in order sufficiently swell or deform upon exposure to moisture.

According to an embodiment of the present invention, the method for manufacturing a three-dimensional object with an additive manufacturing system further comprises the steps of:
- printing layers of a support structure from the support material, and
- removing at least a portion of the support structure from the three-dimensional object.

A variety of polymeric components can be used as a support material. Notably, support material can comprise polyamides or copolyamides, such as for example the ones described in patent applications WO 2017/167691 and WO 2017/167692.

### Applications

The present invention also relates to the use of a part material comprising a polymeric component as above-described (PAEK, optionally PPSU) for the manufacture of three-dimensional objects.

The present invention also relates to the use of a part material comprising a polymeric component as above-described for the manufacture of a filament for use in the manufacture of three-dimensional objects.

All of the embodiments described above with respect to the part material and the filament do apply equally to the applications.

The present invention also relates to the use of a filament material comprising a polymeric component as above-described for the manufacture of three-dimensional objects.

3D objects or 3D articles can be obtained, at least in part, from the method of manufacture of the present invention, using the part material herein described. These 3D objects or 3D articles present a density comparable to injection molded objects or articles. They also present comparable or improved mechanical properties, notably stiffness (measured as the modulus of elasticity), ductility (measured as the elongation at break) and tensile strength.

The 3D objects or articles obtainable by such method of manufacture can be used in a variety of final applications. Mention can be made in particular of implantable device, dental prostheses, brackets and complex shaped parts in the aerospace industry and under-the-hood parts in the automotive industry.

### EXAMPLES

The invention will be now described in more detail with reference to the following examples, whose purpose is merely illustrative and not intended to limit the scope of the invention.

### Starting Materials

The following polymers were used to prepare filaments:
Boron nitride, Boronid^{®} S1-SF, with a D50 particle size of 2.5 µm, commercially available from 3M Technical Ceramics, formerly ESK Ceramics Gmbh & Co KG (CAS # 10043-11-5)
Carbon fibers, Sigrafil^{®} C30 S006 APS, commercially available from SGL TECHNIC Ltd
Talc, Mistron^{®} Vapor talc of particle size 1.6 to 2.8 µm, commercially available from Lintech International
Stabilizer: Hostanox^{®} P-EPQ^{®} powder (CAS # 119345-01-6) supplied by Clariant Corporation
**PEEK #1:** a poly(ether ether ketone) (PEEK) having a Mw of 71,300 g/mol, prepared according to the following process: In a 500 ml 4-neck reaction flask fitted with a stirrer, a N₂ inlet tube, a Claisen adapter with a thermocouple plunging in the reaction medium, and a Dean-Stark trap with a condenser and a dry ice trap were introduced 128 g of diphenyl sulfone, 28.6 g of p-hydroquinone, and 57.2 g of 4,4'-difluorobenzophenone. The reaction mixture was heated slowly to 150 ° C. At 150° C, a mixture of 28.43 g of dry Na₂CO₃ and 0.18 g of dry K₂CO₃ was added via a powder dispenser to the reaction mixture over 30 minutes. At the end of the addition, the reaction mixture was heated to 320° C at 1°C/minute. After 15 to 30 minutes, when the polymer had the expected Mw, the reaction was stopped by the introduction of 6.82 g of 4,4'-difluorobenzophenone to the reaction mixture while keeping a nitrogen purge on the reactor. After 5 minutes, 0.44 g of lithium chloride were added to the reaction mixture. 10 minutes later, another 2.27 g of 4,4'-difluorobenzophenone were added to the reactor and the reaction mixture was kept at temperature for 15 minutes. The reactor content was then cooled. The solid was broken up and ground. The polymer was recovered by filtration of the salts, washing and drying. The GPC analysis showed a number average molecular weight Mw= 71,300 g/mol.
**PEEK #2:** a poly(ether ether ketone) (PEEK) having a Mw of 102,000 g/mol, prepared according to the same process than PEEK #1, except that the reaction was stopped later.
**PEEK #3:** blend of 35 wt. % of PEEK #1 and 65 wt. % of PEEK #2, the blend having a measured Mw of 91,000 g/mol.
**PPSU #1:** a poly(biphenyl ether sulfone) (PPSU) with a Mw of 45,600 g/mol, prepared according to the following process:
   The synthesis of the PPSU was achieved by the reaction in a 1L flask of 83.8 g of 4,4'-biphenol (0.450 mol), 131.17 g of 4,4'-dichlorodiphenyl sulfone (0.457 mol) dissolved in a mixture of 400 g of sulfolane with the addition of 66.5g (0.481 mol) of dry K₂CO₃.
   The reaction mixture was heated up to 210°C and maintained at this temperature until the polymer had the expected Mw. An excess of methyl chloride was then added to the reaction.
   The reaction mixture was diluted with 600 g of MCB. The poly(biphenyl ether sulfone) was recovered by filtration of the salts, coagulation, washing and drying. The GPC analysis showed a number average molecular weight (Mn) of 19,100 g/mol, an average molecular weight (Mw) of 45,600 g/mol and a polydispersity (Mw/Mn) of 2.39.
**PSU #1:** Udel^{®} P1700 commercially available from Solvay Specialty Polymers LLC.

### Blend Compounding

Each formulation was melt compounded using a 26 mm diameter Coperion^{®} ZSK-26, a twin screw co-rotating partially intermeshing extruder having 12 barrel sections and an overall LID ratio of 48. The barrel sections 2 through 12 and the die were heated to set point temperatures as follows:
Barrels 2-6: 190 to 300°C
Barrels 7-12: 300 to 320°C
Die: 330°C

In each case, the pre-mixed resin blends were fed at barrel section 1 using a gravimetric feeder at throughput rates in the range 30-35 lb/hr. The extruder was operated at screw speeds of around 165 RPM. Vacuum was applied at barrel zone 10 with a vacuum level of about 27 inches of mercury. A single-hole die was used for all the compounds to give a filament approximately 2.6 to 2.7 mm in diameter and the polymer filament exiting the die was cooled in water and fed to the pelletizer to generate pellets approximately 2.7 mm in length. Pellets were dried at 140° C for 16 h under vacuum prior to filament processing (FFF, according to the invention) or injection molding (IM, comparative example).

### Filament Preparation

Filaments of diameter of 1.75 mm were prepared for each blend (see Table 1 and 2) using a Brabender^{®} Intelli-Torque Plasti-Corder^{®} Torque Rheometer extruder equipped with a 0.75" 32 LID general purpose single screw, a filament head adapter, a 2.5-mm nozzle and ESI-Extrusion Services downstream equipment comprising a cooling tank, a belt puller, and a Dual Station Coiler. A Beta LaserMike^{®} DataPro 1000 was used to monitor filament dimensions. The melt strands were cooled with air. Processing temperatures for the different Brabender^{®} zones ranged from 330 - 360°C, while the extrusion speed ranged from 30-50 rpm. The puller speed ranged from 23-37 fpm.

### Fused Filament Fabrication bars (FFF bars)

Test bars (i.e. ASTM D638 Type V bars) were printed from the above filaments of 1.75 mm in diameter on a Hyrel 16A 3D printer equipped with a 0.5 mm diameter nozzle. The extruder temperature was 380°C and the bed temperature was 135°C. Bars were oriented in the XY direction on the build platform during printing. Test bars were printed with a 10 mm-wide brim and three perimeters. The tool path was a cross-hatch pattern with a 45° angle with respect to the long axis of the part. The speed of the nozzle for deposition of the first layer was 4.5 mm/ sec; otherwise, speed varied from 10 to 25 mm/s. The first layer height in each case was 0.4 mm, with subsequent layers deposited at 0.1 mm height and 100% fill density.

### IM bars (comparative)

ASTM D638 Type V bars were also obtained by injection molding. Example 4c was processed in a mold regulated at 160° C on a 110 ton Toyo IMM.

### Test methods

### * Weight average molecular weight (Mw) and number average molecular weight (Mn) of the PPSU polymers

The molecular weight was measured by gel permeation chromatography (GPC), using methylene chloride as a mobile phase. Two 5µ mixed D columns with guard column from Agilent Technologies were used for separation. An ultraviolet detector of 254nm was used to obtain the chromatogram. A flow rate of 1.5 ml/min and injection volume of 20 µL of a 0.2 w/v% solution in mobile phase was selected. Calibration was performed with 12 narrow molecular weight polystyrene standards (Peak molecular weight range: 371,000 to 580 g/mol). The weight average molecular weight (Mw) and number average molecular weight (Mn) was reported.

### * Modulus

Modulus was determined according to the ASTM D638 method.

### *Tensile strength

Tensile strength and modulus were determined according to the ASTM D638 method with Type V bars.

The test bars (according to the present invention or comparative) and their mechanical properties are reported in Tables 1 and 2 below (5 test bars/mean value).

**Table 1**

| | **1c** | **2c** | **3** | **4c** | **5c** |
|---|---|---|---|---|---|
| C: comparative | C | C | I | C | C |
| I: according to the disclosure | | | | | |
| PEEK #1 | 90 | - | - | - | - |
| PEEK #3 | - | 100 | 95 | 95 | 95 |
| Boron nitride (BN) | - | - | 4.9 | 4.9 | - |
| Talc | - | - | - | - | 4.9 |
| Carbon fibers | 10 | - | - | - | - |
| Stabilizer | - | - | 0.1 | 0.1 | 0.1 |
| **Process** | **FFF** | **FFF** | **FFF** | **IM** | **FFF** |
| **Modulus of Elasticity (GPa)** | 10.7 | 3.3 | 4.0 | 4.7 | 2.5 |
| **Nominal Tensile Strain at Yield (%)** | - | 6.1 | 5.3 | 5.0 | - |
| **Nominal Tensile Strain at Break (%)** | 1.7 | 18 | 13 | 45 | 4.3 |
| **Density / printing quality** | 1.29 | 1.28 | 1.31 | 1.32 | 1.27 |
| **Testing Speed (in/min)** | 0.05 | 0.05 | 0.05 | 0.05 | 0.05 |

The printing quality is assessed by the measurement of the density of the part.

The FFF part of example 3 shows significantly higher elastic modulus than the FFF part without BN of example 2c. Elongation at break, at 13%, is lower with BN, but the value is still in a ductile range (a yield is observed at an elongation at yield of about 5.3%).

Example 1c shows the complete loss of ductility in the FFF part containing 10 wt. % carbon fibers. While the presence of carbon fiber gives high modulus and strength, the results show that the use of BN promises advantages in combined better printability, ductility, modulus and colorability (the parts are not black and can be colored by using pigments or dyes).

The composition of example 3 has a melt rheology and solidification dynamics that are especially suitable for the FFF process. The composition of example 1c and 2c show small drops in density with the FFF process. Furthermore, the fracture surfaces of the impact bars obtained with the composition of example 3 show no signs of porosity, in contrast to the other compositions containing talc or carbon fibers.

Boronid^{®} Boron Nitride is a platy micron size mineral. Mistron^{®} talc is similar in geometry and size. The FFF part of Example 5c with talc however has poor mechanical properties compared to the FFF part of example 3 with boron nitride : complete loss of the ductility (no yield observed) with a very low elongation at break. Also, the tensile modulus of the composition 5c is lower than the tensile modulus of PEEK.

**Table 2**

| | **6** | **7c** | **8c** | **9c** |
|---|---|---|---|---|
| C: comparative | I | C | C | C |
| I: according to the disclosure | | | | |
| PEEK #2 | 72 | 72 | 75 | 75 |
| PPSU #1 | 23 | - | 25 | - |
| PSU #1 | - | 23 | - | 25 |
| Boron nitride (BN) | 4.9 | 4.9 | - | - |
| Stabilizer | 0.1 | 0.1 | - | - |
| **Process** | **FFF** | **FFF** | **FFF** | **FFF** |
| **Modulus of Elasticity (GPa)** | 3.3 | 2.9 | 2.4 | 2.7 |
| **Nominal Tensile Strain at Break (%)** | 25 | 8 | 10 | 50 |
| **Density / printing quality** | 1.31 | 1.27 | 1.27 | 1.27 |
| **Testing Speed (in/min)** | 0.05 | 0.05 | 0.05 | 0.05 |

The highest density obtained in Table 2 is with the composition of example 6.

The FFF part of example 6 shows significantly higher elastic modulus and elongation at break than the FFF part without BN of example 8c.

The FFF part of example 6 (PEEK/PPSU blend) shows also significantly higher elastic modulus and elongation at break than the FFF part of example 7c (PEEK/PSU blend). This is surprising because in the absence of BN, FFF processing of the PEEK/PSU blend gives moderately higher modulus strength and ductility than the PEEK/PPSU blend.

## Claims

1. A method for manufacturing a three-dimensional (3D) object with an additive manufacturing system, comprising extruding a part material to print layers of the 3D object,
wherein the part material comprises:
- from 50 to 99 wt. % of a polymeric material comprising at least one poly(aryl ether ketone) polymer (PAEK), and optionally at least one poly(biphenyl ether sulfone) polymer (PPSU) and/or at least one poly(ether imide) polymer (PEI),
- at least one nitride (N), preferably a boron nitride (BN);
wherein the part material comprises at least 1 wt.% and less than 10 wt.% of at least one nitride (N),
these proportions in wt.% being based on the total weight of the part material.

2. The method of claim 1, wherein the part material also comprises up to 45 wt. %, based on the total weight of the part material, of at least one additive selected from the group consisting of fillers, colorants, lubricants, plasticizers, flame retardants, nucleating agents, flow enhancers and stabilizers.

3. The method of any one of the preceding claims, wherein the part material comprises at least 80 wt. %, based on the total weight of the part material, of the polymeric material selected from the group consisting of:
- PAEK,
- a blend of PAEK and PPSU,
- a blend of PAEK and PEI, or
- a blend of PAEK, PPSU and PEI.

4. The method of any one of the preceding claims, wherein the PAEK is a poly(ether ether ketone) (PEEK).

5. The method of claim 4, wherein all the recurring units of the PEEK are recurring units of formula (J"-A):

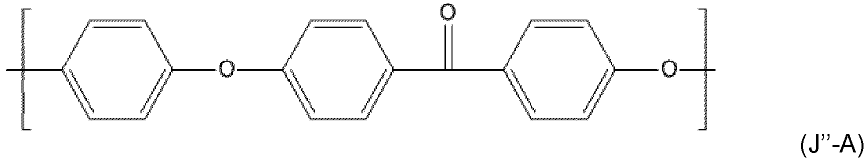

6. The method of claim 4 or 5, wherein the melt flow index of the PEEK, measured at 400°C under a weight of 2.16 kg according to ASTM D1238, is from 1 to 60 g/10 min.

7. The method of any one of the preceding claims, wherein the PPSU is a polymer where at least 95 mol. % of the recurring units in the PPSU are recurring units (R_{PPSU}) of formula (L"): 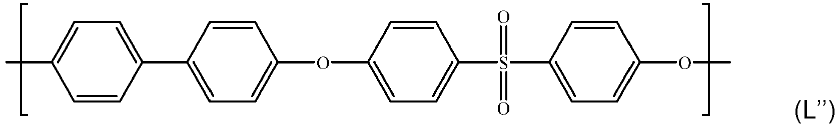 (the mol. % being based on the total number of moles in the polymer).

8. The method of any one of the preceding claims, wherein the part material is in the form of a filament having a cylindrical geometry and a diameter comprised between 0.5 and 5 mm ± 0.2 mm, preferably between 1 and 3.5 mm ± 0.15 mm.

9. A filament material having a cylindrical geometry and a diameter comprised between 1 and 3.5 mm ± 0.15 mm, comprising a part material,
where the part material comprises:
- from 50 to 99 wt. % of at least one poly(aryl ether ketone) polymer (PAEK), and optionally at least one poly(biphenyl ether sulfone) polymer (PPSU),
- from 1 to 10 wt% of at least one nitride (N), preferably a boron nitride (BN),
these proportions in wt.% being based on the total weight of the part material.

10. Filament according to claim 9, wherein the PAEK is a PEEK.

11. Filament according to claim 10, wherein all the recurring units of the PEEK are recurring units of formula (J"-A):

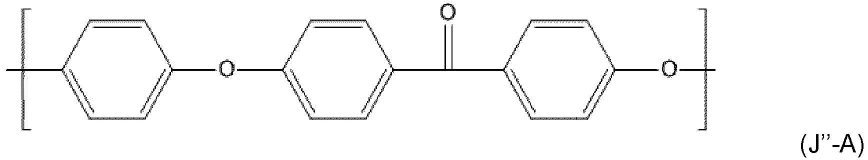

12. Filament of claim 10 or 11, wherein the melt flow index of the PEEK, measured at 400°C under a weight of 2.16 kg according to ASTM D1238, is from 1 to 60 g/10 min.

13. Filament according to any one of claims 9-12, wherein the PPSU is a polymer where at least 95 mol. % of the recurring units in the PPSU are recurring units (R_{PPSU}) of formula (L"): 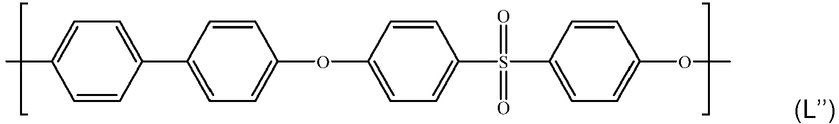 (the mol. % being based on the total number of moles in the polymer).

14. Use of a part material comprising:
- from 50 to 99 wt. % of a polymeric material comprising at least one poly(aryl ether ketone) polymer (PAEK), and optionally at least one poly(biphenyl ether sulfone) polymer (PPSU),
- from 1 to 10 wt% of at least one nitride (N), preferably a boron nitride (BN). for the manufacture of three-dimensional objects,
these proportions in wt% being based on the total weight of the part material,
and wherein the part material is in the form of a filament, having a cylindrical geometry and a diameter comprised between 1 and 3.5 mm ± 0.15 mm.

15. Use according to claim 14, wherein the PAEK is a PEEK.

16. Use according to claim 15, wherein all the recurring units of the PEEK are recurring units of formula (J"-A):

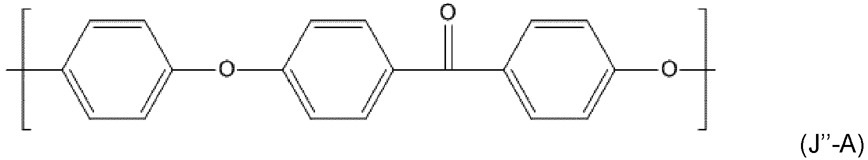

17. Use according to any one of claims 14-16, wherein the PPSU is a polymer where at least 95 mol. % of the recurring units in the PPSU are recurring units (R_{PPSU}) of formula (L"): 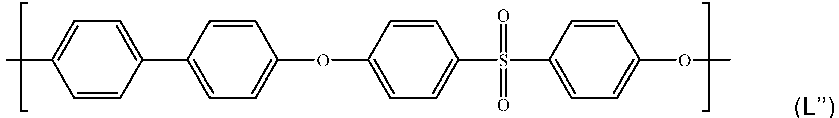 (the mol. % being based on the total number of moles in the polymer).

18. Use of a part material comprising:
- from 50 to 99 wt. % of a polymeric material comprising at least one poly(aryl ether ketone) polymer (PAEK), and optionally at least one poly(biphenyl ether sulfone) polymer (PPSU),
- from 1 to 10 wt% of at least one nitride (N), preferably a boron nitride (BN),
these proportions in wt% being based on the total weight of the part material,
for the manufacture of a filament having a cylindrical geometry and a diameter comprised between 1 and 3.5 mm ± 0.15 mm, for use in the manufacture of three-dimensional objects.

## Patentansprüche

1. Verfahren zur Fertigung eines dreidimensionalen (3D) Objekts mit einem generativen Fertigungssystem, umfassend Extrudieren eines Teilmaterials, um Schichten des 3D-Objekts zu drucken, wobei das Teilmaterial basierend auf dem Gesamtgewicht des Teilmaterials umfasst:
- 50 bis 99 Gew.% eines polymeren Materials, das mindestens ein Poly(aryletherketon)polymer (PAEK) und gegebenenfalls mindestens ein Poly-(biphenylethersulfon)polymer (PPSU) und/oder mindestens ein Poly(etherimid)polymer (PEI) umfasst,
- mindestens einem Nitrid (N), vorzugsweise einem Bornitrid (BN);
wobei das Teilmaterial mindestens 1 Gew.-% und weniger als 10 Gew.-% mindestens einem Nitrid (N) umfasst,
diese Gewichtsanteile beziehen sich auf das Gesamtgewicht des Teilematerials.

2. Verfahren nach Anspruch 1, wobei das Teilmaterial auch bis zu 45 Gew.%, bezogen auf das Gesamtgewicht des Teilmaterials, von mindestens einem Additiv ausgewählt aus der Gruppe bestehend aus Füllstoffen, Färbungsmitteln, Schmiermitteln, Plastifizierungsmitteln, Flammhemmern, Nukleierungsmitteln, Fließverbesserern und Stabilisatoren umfasst.

3. Verfahren nach einem der vorhergehenden Ansprüche, wobei das Teilmaterial mindestens 80 Gew.%, bezogen auf das Gesamtgewicht des Teilmaterials, des polymeren Materials ausgewählt aus der Gruppe bestehend aus folgenden umfasst:
- PAEK,
- einem Gemisch aus PAEK und PPSU,
- einem Gemisch aus PAEK und PEI, oder
- einem Gemisch aus PAEK, PPSU und PEI.

4. Verfahren nach einem der vorhergehenden Ansprüche, wobei das PAEK ein Poly(etheretherketon) (PEEK) ist.

5. Verfahren nach Anspruch 4, wobei alle der sich wiederholenden Einheiten von dem PEEK sich wiederholende Einheiten der Formel (J"-A) sind:

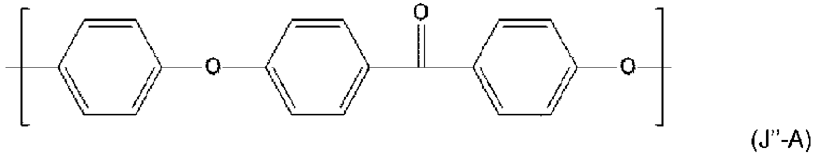

6. Verfahren nach Anspruch 4 oder 5, wobei der Schmelzindex bei 400 °C unter einem Gewicht von 2,16 kg gemäß ASTM D1238 von dem PEEK 1 bis 60 g/10 min beträgt.

7. Verfahren nach einem der vorhergehenden Ansprüche, wobei das PPSU ein Polymer ist, bei dem mindestens 95 Mol.% der sich wiederholenden Einheiten in dem PPSU sich wiederholende Einheiten (R_{PPSU}) mit der Formel (L") sind: 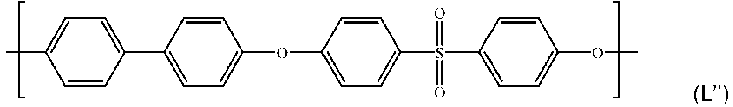 (die Mol.% beziehen sich auf die Gesamtanzahl der Mole in dem Polymer).

8. Verfahren nach einem der vorhergehenden Ansprüche, wobei das Teilmaterial in Form eines Filaments mit einer zylindrischen Geometrie und einem Durchmesser, der zwischen 0,5 und 5 mm ± 0,2 mm, vorzugsweise zwischen 1 und 3,5 mm ± 0,15 mm liegt, vorliegt.

9. Filamentmaterial mit einer zylindrischen Geometrie und einem Durchmesser, der zwischen 0,5 und 3,5 mm ± 0,15 mm, vorzugsweise zwischen 1 und 3,5 mm ± 0,15 mm liegt, umfassend:
- 50 bis 99 Gew.% von mindestens einem Poly(aryl-etherketon)polymer (PAEK) und gegebenenfalls mindestens einem Poly(biphenylethersulfon)polymer (PPSU),
- 1 bis 10 Gew.% von mindestens einem Nitrid (N), vorzugsweise einem Bornitrid (BN);
- diese Gewichtsanteile beziehen sich auf das Gesamtgewicht des Teilmaterials.

10. Filament nach Anspruch 9, wobei das PAEK ein PEEK ist.

11. Filament nach Anspruch 10, wobei alle der sich wiederholenden Einheiten von dem PEEK sich wiederholende Einheiten der Formel (J"-A) sind:

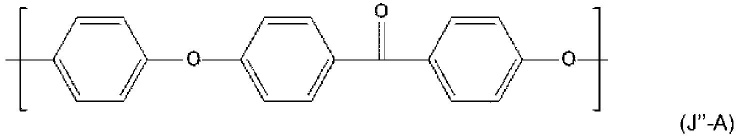

12. Filament nach Anspruch 10 oder 11, wobei der Schmelzindex bei 400 °C unter einem Gewicht von 2,16 kg gemäß ASTM D1238 von dem PEEK 1 bis 60 g/10 min beträgt.

13. Filament nach einem der Ansprüche 9 bis 12, wobei das PPSU ein Polymer ist, bei dem mindestens 95 Mol.% der sich wiederholenden Einheiten in dem PPSU sich wiederholende Einheiten (R_{PPSU}) mit der Formel (L") sind: 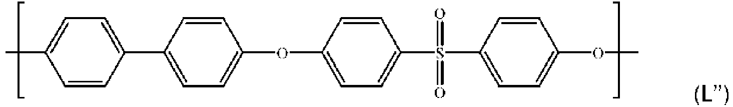 (die Mol.% beziehen sich auf die Gesamtanzahl der Mole in dem Polymer).

14. Verwendung eines Teilmaterials, umfassend:
- 50 bis 99 Gew.% von einem polymeren Material, das mindestens ein Poly(aryletherketon)polymer (PAEK) und gegebenenfalls mindestens ein Poly(biphenyl-ethersulfon)polymer (PPSU) umfasst,
- 1 bis 10 Gew.% von mindestens einem Nitrid (N), vorzugsweise einem Bornitrid (BN),
zur Fertigung von dreidimensionalen Objekten, diese Gewichtsanteile beziehen sich auf das Gesamtgewicht des Teilmaterials;
wobei das Teilmaterial in Form eines Filaments mit einer zylindrischen Geometrie und einem Durchmesser, der zwischen 0,5 und 3,5 mm ± 0,15 mm, vorzugsweise zwischen 1 und 3,5 mm ± 0,15 mm liegt, vorliegt.

15. Verwendung nach Anspruch 14, wobei das PAEK ein PEEK ist.

16. Verwendung nach Anspruch 15, wobei alle der sich wiederholenden Einheiten von dem PEEK sich wiederholende Einheiten der Formel (J"-A) sind:

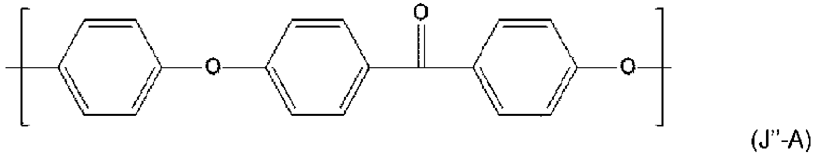

17. Verwendung nach einem der Ansprüche 14 bis 16, wobei das PPSU ein Polymer ist, bei dem mindestens 95 Mol.% der sich wiederholenden Einheiten in dem PPSU sich wiederholende Einheiten (R_{PPSU}) mit der Formel (L") sind: 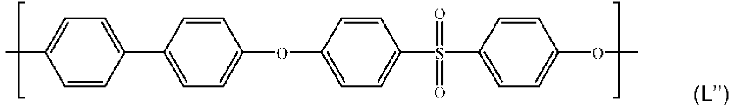 (die Mol.% beziehen sich auf die Gesamtanzahl der Mole in dem Polymer).

18. Verwendung eines Teilmaterials, umfassend:
- 50 bis 99 Gew.% von einem polymeren Material, das mindestens ein Poly(aryletherketon)polymer (PAEK) und gegebenenfalls mindestens ein Poly-(biphenylethersulfon)polymer (PPSU) umfasst,
- 1 bis 10 Gew.% von mindestens einem Nitrid (N), vorzugsweise einem Bornitrid (BN),
- diese Gewichtsanteile beziehen sich auf das Gesamtgewicht des Teilmaterials,
zur Fertigung eines Filaments mit einer zylindrischen Geometrie und einem Durchmesser, der zwischen 0,5 und 3,5 mm ± 0,15 mm, vorzugsweise zwischen 1 und 3,5 mm ± 0,15 mm liegt, zur Verwendung in der Fertigung von dreidimensionalen Objekten.

## Revendications

1. Procédé pour la fabrication d'un objet tridimensionnel (3D) avec un système de fabrication additive, comprenant une extrusion d'un matériau de pièce pour imprimer des couches de l'objet en 3D, le matériau de pièce comprenant, sur la base du poids total du matériau de pièce :
- de 50 à 99 % en poids d'un matériau polymérique comprenant au moins un polymère de type polyaryléthercétone (PAEK), et éventuellement au moins un polymère de type polybiphényléthersulfone (PPSU) et/ou au moins un polymère de type polyétherimide (PEI),
- au moins un nitrure (N), préférablement un nitrure de bore (BN);
- dans lequel le matériau de pièce comprend au moins 1 % en poids et moins de 10 % en poids d'au moins un nitrure (N),
- ces proportions en % en poids étant données par rapport au poids total du matériau de pièce.

2. Procédé selon la revendication 1, le matériau de pièce comprenant également jusqu'à 45 % en poids, sur la base du poids total du matériau de pièce, d'au moins un additif choisi dans le groupe constitué par des charges, des matières colorantes, des lubrifiants, des plastifiants, des agents ignifugeants, des agents de nucléation, des agents d'amélioration de l'écoulement et des stabilisants.

3. Procédé selon l'une quelconque des revendications précédentes, le matériau de pièce comprenant au moins 80 % en poids, sur la base du poids total du matériau de pièce, du matériau polymérique choisi dans le groupe constitué par :
- PAEK,
- un mélange de PAEK et de PPSU,
- un mélange de PAEK et de PEI ou
- un mélange de PAEK, de PPSU et de PEI.

4. Procédé selon l'une quelconque des revendications précédentes, le PAEK étant une polyétheréthercétone (PEEK).

5. Procédé selon la revendication 4, tous les motifs répétitifs de la PEEK étant des motifs répétitifs de formule (J"-A) :

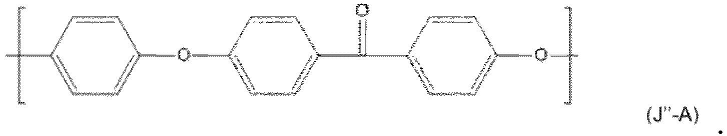

6. Procédé selon la revendication 4 ou 5, l'indice de fluidité à chaud, à 400 °C sous un poids de 2,16 kg selon la norme ASTM D1238, de la PEEK étant de 1 à 60 g/10 min.

7. Procédé selon l'une quelconque des revendications précédentes, le PPSU étant un polymère où au moins 95 % en moles des motifs répétitifs dans le PPSU sont des motifs répétitifs (R_{PPSU}) de formule (L") 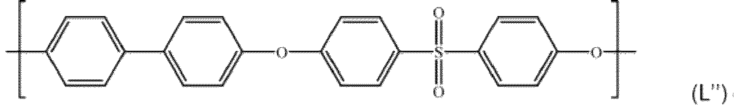 (le % en moles étant basé sur le nombre total de moles dans le polymère).

8. Procédé selon l'une quelconque des revendications précédentes, le matériau de pièce étant sous la forme d'un filament ayant une géométrie cylindrique et un diamètre compris entre 0,5 et 5 mm ± 0,2 mm, préférablement entre 1 et 3,5 mm ± 0,15 mm.

9. Matériau de filament ayant une géométrie cylindrique et un diamètre compris entre 0,5 et 3,5 mm ± 0,15 mm, préférablement entre 1 et 3,5 mm ± 0,15 mm, comprenant un matériau de pièce,
le matériau de pièce comprenant:
- de 50 à 99 % en poids d'au moins un polymère de type polyaryléthercétone (PAEK) et éventuellement d'au moins un polymère de type polybiphényléthersulfone (PPSU),
- de 1 à 10 % en poids d'au moins un nitrure (N), préférablement un nitrure de bore (BN);
- ces proportions en % en poids étant données par rapport au poids total du matériau de pièce.

10. Filament selon la revendication 9, le PAEK étant une PEEK.

11. Filament selon la revendication 10, tous les motifs répétitifs de la PEEK étant des motifs répétitifs de formule (J"-A) :

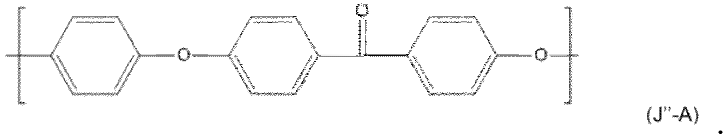

12. Filament selon la revendication 10 ou 11, l'indice de fluidité à chaud, à 400 °C sous un poids de 2,16 kg selon la norme ASTM D1238, de la PEEK étant de 1 à 60 g/10 min.

13. Filament selon l'une quelconque des revendications 9 à 12, le PPSU étant un polymère où au moins 95 % en moles des motifs répétitifs dans le PPSU sont des motifs répétitifs (R_{PPSU}) de formule (L") : 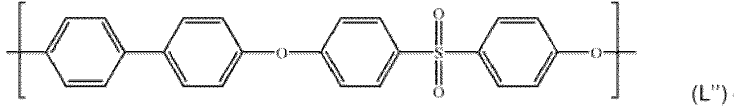 (le % en moles étant basé sur le nombre total de moles dans le polymère).

14. Utilisation d'un matériau de pièce comprenant :
- de 50 à 99 % en poids d'un matériau polymérique comprenant au moins un polymère de type polyaryléthercétone (PAEK) et éventuellement au moins un polymère de type polybiphényléthersulfone (PPSU),
- de 1 à 10 % en poids d'au moins un nitrure (N), préférablement un nitrure de bore (BN)
pour la fabrication d'objets tridimensionnels,
ces proportions en % en poids étant données par rapport au poids total du matériau de pièce,
le matériau de pièce étant sous la forme d'un filament, ayant une géométrie cylindrique et un diamètre compris entre 0,5 et 3,5 mm ± 0,15 mm, préférablement entre 1 et 3,5 mm ± 0,15 mm.

15. Utilisation selon la revendication 14, le PAEK étant une PEEK.

16. Utilisation selon la revendication 15, tous les motifs répétitifs de la PEEK étant des motifs répétitifs de formule (J"-A) :

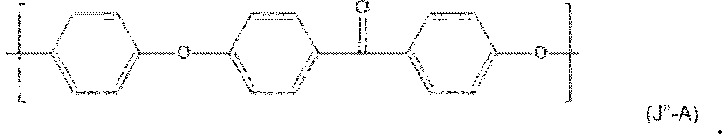

17. Utilisation selon l'une quelconque des revendications 14 à 16, le PPSU étant un polymère où au moins 95 % en moles des motifs répétitifs dans le PPSU sont des motifs répétitifs (R_{PPSU}) de formule (L") : 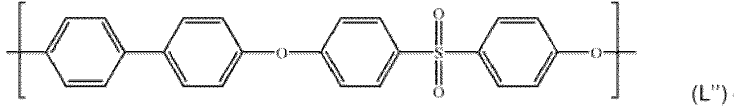 (le % en moles étant basé sur le nombre total de moles dans le polymère).

18. Utilisation d'un matériau de pièce comprenant :
- de 50 à 99 % en poids d'un matériau polymérique comprenant au moins un polymère de type polyaryléthercétone (PAEK) et éventuellement au moins un polymère de type polybiphényléthersulfone (PPSU),
- de 1 à 10 % en poids d'au moins un nitrure (N), préférablement un nitrure de bore (BN),
pour la fabrication d'un filament ayant une géométrie cylindrique et un diamètre compris entre 0,5 et 3,5 mm ± 0,15 mm, préférablement entre 1 et 3,5 mm ± 0,15 mm, pour une utilisation dans la fabrication d'objets tridimensionnels.
